(19) Europäisches Patentamt / European Patent Office / Office européen des brevets

(11) **EP 2 520 949 B1**

(12) **FASCICULE DE BREVET EUROPEEN**

(45) Date de publication et mention de la délivrance du brevet:
**26.02.2014 Bulletin 2014/09**

(51) Int Cl.:
**G01S 19/22** (2010.01)     **G01S 19/30** (2010.01)

(21) Numéro de dépôt: **12166626.7**

(22) Date de dépôt: **03.05.2012**

(54) **Dispositif de réception d'un système de positionnement par satellite comprenant une fonction de détection de faux accrochages**

Empfangsvorrichtung eines Satelliten-Positioniersystems, das eine Erkennungsfunktion von Fehlkopplungen umfasst

Device for receiving a satellite positioning system including a function for detecting false locking

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.05.2011 FR 1101391**

(43) Date de publication de la demande:
**07.11.2012 Bulletin 2012/45**

(73) Titulaire: **Thales**
**92200 Neuilly Sur Seine (FR)**

(72) Inventeurs:
• **Martin, Nicolas**
**26500 Bourg les Valence (FR)**
• **Fouilland, Bernard**
**26120 Fauconnières (FR)**
• **Guichon, Hervé**
**07500 Guilherand (FR)**

(74) Mandataire: **Collet, Alain**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 0 767 388     EP-A1- 1 734 377**
**US-A- 5 949 815**

• **ALEKSANDAR JOVANOVIC ET AL: "Multipath mitigation techniques for CBOC, TMBOC and AltBOC signals using advanced correlators architectures", POSITION LOCATION AND NAVIGATION SYMPOSIUM (PLANS), 2010 IEEE/ION, IEEE, PISCATAWAY, NJ, USA, 4 mai 2010 (2010-05-04), pages 1127-1136, XP031707007, ISBN: 978-1-4244-5036-7**

**Description**

La présente invention concerne un dispositif de réception d'un système de positionnement par satellite comprenant une fonction de détection de faux accrochages. Elle s'applique notamment aux systèmes de radionavigation par satellite, communément désignés suivant le sigle GNSS désignant la terminologie anglaise "Global Navigation Satellite System", et peut être mise en oeuvre dans tout récepteur de navigation.

Un système de positionnement par satellite ou GNSS, comprend une pluralité d'émetteurs de signaux disposés sur autant de satellites formant une constellation. Un minimum de quatre satellites de positionnement permettent à un récepteur mobile apte à traiter les signaux reçus en provenance de ceux-ci, de délivrer des données de position du récepteur, en termes de coordonnées géographiques (x,y,z) à un instant t déterminé. Les signaux transmis par les satellites de positionnement occupent une bande passante plus large que ce que requiert le débit de données à transmettre, dans le but de réduire l'influence des signaux interférents, et de réduire la densité de puissance spectrale des signaux transmis de manière à ce que ceux-ci soient masqués dans le bruit de fond. Ainsi, selon des techniques en elles-mêmes connues, le spectre des signaux transmis est étalé, une onde porteuse étant modulée par un signal de données superposé à un signal d'étalement de bruit pseudo-aléatoire à haute fréquence, suivant une séquence périodique propre à chaque satellite.

Selon ces techniques, le positionnement par satellite, déterminé au niveau du récepteur, consiste en premier lieu à détecter, dans une étape d'acquisition, les codes d'étalement pseudo-aléatoires modulant les signaux provenant des satellites. Chaque signal émis par un satellite visible et reçu par l'antenne du récepteur doit alors être démodulé par le récepteur, afin de déterminer notamment une mesure de temps de propagation et de Doppler.

Des moyens de calcul mis en oeuvre dans le récepteur permettent alors de synchroniser sur les signaux satellites reçus des répliques de ces signaux générées localement. Un asservissement est réalisé par une boucle de porteuse, pilotant la phase de la porteuse locale, et par une boucle de code pilotant la position, ou phase, du code local. Cette synchronisation permet au récepteur d'évaluer les temps de propagation des signaux en provenance des différents satellites, et d'en déduire sa position, en prenant également en considération des données de navigation contenues dans les signaux.

Une phase d'acquisition permet typiquement d'initialiser le fonctionnement des boucles de poursuite, car ni la position, ni la fréquence Doppler ni le code reçu ne sont connus a priori ; or les boucles de poursuite ne peuvent fonctionner que si la position du code et la fréquence Doppler sont proches de celles du signal utile du satellite considéré. Si l'un des écarts est trop élevé, alors une corrélation nulle ne fournit plus d'information, et l'asservissement ne peut se réaliser. Pour réaliser la phase d'acquisition, une recherche d'un pic de corrélation est effectuée entre un signal local et le signal reçu, dans un espace à deux dimensions, en essayant une pluralité d'hypothèses quant à la phase du code et la valeur de la fréquence Doppler, avec un pas suffisamment fin pour permettre la détection du pic de corrélation. Dès lors qu'un pic de corrélation a été trouvé, la recherche du code et de la fréquence Doppler peut être affinée en diminuant le pas de recherche autour du pic de corrélation détecté. Quand la précision obtenue est considérée comme suffisante, les boucles sont fermées, et convergent par construction vers le maximum de corrélation : on passe alors dans une phase dite de "poursuite".

Une cause majeure d'erreurs de positionnement est liée à la présence de trajets multiples ou "multi-trajets" sur les signaux émis par les satellites. Ce phénomène est lié à la réflexion des ondes sur des obstacles, par exemple des bâtiments, le signal reçu étant alors un signal composite constitué des signaux directs et des signaux réfléchis.

Dans le but de réduire les erreurs de multi-trajets, il est possible de recourir, selon une technique en elle-même connue, à un corrélateur dit "Double Delta". Cette solution est présentée dans le brevet français publié sous la référence FR 2739695, et est décrite en détails ci-après. Cette solution présente cependant un risque de faux accrochages, conduisant à des erreurs de positionnement significatives voire inacceptables, jusqu'à un ordre de quelques dizaines de mètres.

Un risque de faux accrochage est dû à l'existence de zones aveugles sur le discriminateur de code Double Delta utilisé pour la boucle de code. Si l'erreur de code tombe dans une zone aveugle dans laquelle le discriminateur de code est nul, la boucle de code passe en boucle ouverte, ce qui conduit à une erreur de mesure statique sur la pseudo-distance.

Un tel risque existe également avec d'autres discriminateurs de code présentant des zones aveugles.

Un but de la présente invention est de remédier au moins aux inconvénients précités, en proposant un dispositif de positionnement par satellite comprenant une fonction de détection de faux accrochages, permettant notamment de remédier aux problèmes de faux accrochages dus à un corrélateur de type Double Delta ou tout discriminateur de code présentant des zones aveugles. Il est à noter à ce titre que dans les exemples développés ci-après, il est fait référence à un corrélateur de type Double Delta, étant entendu que les exemples pourraient également s'appliquer à d'autres types de discriminateurs de code présentant des zones aveugles.

A cet effet, l'invention a pour objet un dispositif de réception d'un système de positionnement par satellite, comprenant au moins un canal de réception configuré pour traiter un signal numérisé reçu provenant d'un signal hyperfréquence émis par un satellite déterminé offrant un code d'étalement propre, chaque canal de réception comprenant au moins:

- des moyens de génération d'une porteuse locale,
- des moyens de démodulation du signal numérisé reçu par la porteuse locale,
- des moyens de génération d'un code local ponctuel correspondant audit code d'étalement du satellite, les moyens de génération générant également une pluralité n de codes locaux décalés par rapport au code local ponctuel de délais $d_i$ non nuls,
- des moyens de corrélation configurés pour déterminer des signaux représentatifs de coefficients de corrélation entre le signal reçu démodulé par la porteuse locale et les codes locaux formant autant de voies de corrélation,
  les signaux restitués par lesdits moyens de corrélation étant traités par un intégrateur de corrélation restituant des signaux complexes $Z_i$ correspondant à des voies de corrélation respectives,
  le dispositif de réception étant **caractérisé en ce que** chaque canal de réception comprend en outre des moyens de détermination d'une fonction de détection de faux accrochages déterminée à partir desdits signaux complexes suivant la relation :

$$Détecteur = \frac{\text{Re}\left[Z_I . \bar{Z}_P\right]}{\|Z_P\|^2},$$

dans laquelle $Z_P$ désigne le signal complexe issue de la voie de corrélation du signal numérisé reçu avec le code local ponctuel, et $Z_I$ désigne une combinaison linéaire desdits signaux complexes $Z_i$ associés à des coefficients de pondération respectifs $\alpha_i$, lesdits délais $d_i$ et coefficients de pondération $\alpha_i$ vérifiant la relation suivante :

$$\begin{cases} \sum_{i=1}^{i=n} \alpha_i = 0 \\ \sum_{i=1}^{i=n} d_i . \alpha_i = 0 \end{cases}.$$

Dans un mode de réalisation de l'invention, un intégrateur de corrélation peut traiter les signaux restitués par lesdits moyens de corrélation pour une pluralité de voies de corrélation déterminées, les signaux complexes Zi étant issus de l'intégrateur de corrélation étant traités par au moins un discriminateur de code restituant un signal commandant une boucle de code, une pluralité des signaux parmi les signaux complexes Zi étant exploitée par la fonction de détection de faux accrochages.

Dans un mode de réalisation de l'invention, le dispositif de réception peut comprendre cinq voies de corrélation :

- une voie de corrélation ponctuelle élaborée à partir du code local ponctuel,
- une voie de corrélation retard élaborée à partir d'un code local décalé du code local ponctuel d'un délai d,
- une voie de corrélation très retard élaborée à partir d'un code local décalé du code local ponctuel d'un délai 2d,
- une voie de corrélation avance élaborée à partir d'un code local décalé du code local ponctuel d'un délai -d et
- une voie de corrélation très avance élaborée à partir d'un code local décalé du code local ponctuel d'un délai -2d,

la fonction de détection de faux accrochages étant élaborée à partir des signaux complexes et définie suivant la relation :

$$Détecteur = \frac{\text{Re}\left[\left(-Z_{TA} + 2.Z_P - Z_{TR}\right).\bar{Z}_P\right]}{\|Z_P\|^2}.$$

Dans un mode de réalisation de l'invention, le dispositif de réception peut comprendre cinq voies de corrélation :

- une voie de corrélation ponctuelle élaborée à partir du code local ponctuel,

- une voie de corrélation retard élaborée à partir d'un code local décalé du code local ponctuel d'un délai d,
- une voie de corrélation très retard élaborée à partir d'un code local décalé du code local ponctuel d'un délai 2d,
- une voie de corrélation avance élaborée à partir d'un code local décalé du code local ponctuel d'un délai -d et
- une voie de corrélation très avance élaborée à partir d'un code local décalé du code local ponctuel d'un délai -2d,

le discriminateur de code élaborant un signal $D_{code}$ formé par une combinaison linéaire des signaux complexes, respectivement désignés $Z_P$, $Z_R$, $Z_{TR}$, $Z_A$, $Z_{TA}$ issus desdites voies de corrélation suivant la relation :

$$D_{code} = \frac{Re[\{2.(Z_A - Z_R) - (Z_{TA} - Z_{TR}).\overline{Z}_P]}{\|Z_P\|^2},$$

la fonction de détection de faux accrochages étant élaborée à partir des mêmes signaux complexes et définie suivant la relation :

$$D\acute{e}tecteur = \frac{Re[(-Z_{TA} + 2.Z_P - Z_{TR}).\overline{Z}_P]}{\|Z_P\|^2}.$$

Dans un mode de réalisation de l'invention, le dispositif de réception peut comprendre en outre des moyens de comparaison configurés pour comparer la valeur de ladite fonction de détection de faux accrochages à une valeur de seuil.

Dans un mode de réalisation de l'invention, le dispositif de réception peut comprendre des moyens d'alerte, configurés pour être déclenchés lorsque ladite valeur de seuil est franchie par ladite fonction de détection de faux accrochages.

Dans un mode de réalisation de l'invention, le dispositif de réception peut comprendre en outre des moyens de commutation configurés pour activer un premier discriminateur de code lorsque ladite fonction de détection de faux accrochages est inférieure à ladite valeur de seuil, ou un second discriminateur de code lorsque ladite fonction de détection de faux accrochages est supérieure à ladite valeur de seuil.

Dans un mode de réalisation de l'invention, le dispositif de réception peut comprendre en outre des moyens de commutation configurés pour activer un second discriminateur de code lorsque ladite fonction de détection de faux accrochages dépasse une première valeur de seuil, et à activer un premier discriminateur de code lorsque ladite fonction de détection de faux accrochages repasse au-dessous d'une seconde valeur de seuil inférieure à ladite première valeur de seuil.

Dans un mode de réalisation de l'invention, ledit premier discriminateur de code peut être de type corrélateur étroit, et ledit second discriminateur de code peut être de type corrélateur Double Delta.

Dans un mode de réalisation de l'invention, ladite ou lesdites valeurs de seuil peuvent être des valeurs prédéterminées.

Dans un mode de réalisation de l'invention, le dispositif de réception peut comprendre en outre des moyens d'estimation du rapport signal à bruit du signal reçu, ladite ou lesdites valeurs de seuil pouvant être ajustées en fonction du rapport signal à bruit estimé par lesdits moyens d'estimation du rapport signal à bruit.

Dans un mode de réalisation de l'invention, le dispositif de réception peut comprendre en outre des moyens de filtrage de bruit s'appliquant à la fonction de détection de faux accrochages.

Dans un mode de réalisation de l'invention, le dispositif de réception peut comprendre en outre des moyens d'estimation de biais, formés par une seconde fonction de détection de faux accrochages déterminée à partir de signaux complexes correspondant à des voies de corrélation additionnelles formées à partir de codes locaux décalés entre eux et décalés par rapport au code local ponctuel d'une avance ou d'une retard supérieur à 1 chip.

D'autres caractéristiques et avantages de l'invention apparaîtront à la lecture de la description, donnée à titre d'exemple, faite en regard des dessins annexés qui représentent :

- la figure 1, un schéma illustrant au moyen de blocs fonctionnels, un canal de traitement numérique d'un récepteur de positionnement par satellites ;
- les figures 2a et 2b, des courbes illustrant les caractéristiques de la fonction de corrélation, respectivement avec un corrélateur classique, et un corrélateur de type Double Delta ;
- les figures 3a et 3b, des courbes illustrant notamment les caractéristiques d'une fonction de détection de faux accrochages, selon un exemple de réalisation de l'invention ;

- la figure 4, une courbe illustrant la caractéristique de la fonction de corrélation avec un corrélateur de type étroit.

La présente invention propose de disposer un corrélateur spécifique en parallèle du corrélateur de type Double Delta, dans le but d'élaborer un indicateur de faux accrochage. Ce corrélateur spécifique s'annule lorsque l'erreur de code se situe dans la zone aveugle, et atteint son maximum non nul pour une erreur de code nulle.

Ainsi lorsque l'indicateur élaboré à partir de ce corrélateur spécifique passe par exemple en dessous d'un certain seuil, un risque de faux accrochage dans une zone aveugle peut être détecté. Dans un tel cas il est possible de substituer provisoirement au corrélateur de type Double Delta, par exemple un corrélateur étroit, permettant de faire converger l'erreur de code vers zéro, jusqu'à ce que l'indicateur repasse au-dessus du seuil.

Cette solution présente l'avantage de n'affecter en rien les performances du Double Delta, tant que l'indicateur demeure au-dessus du seuil. La solution permet alors une convergence rapide en cas de faux accrochage.

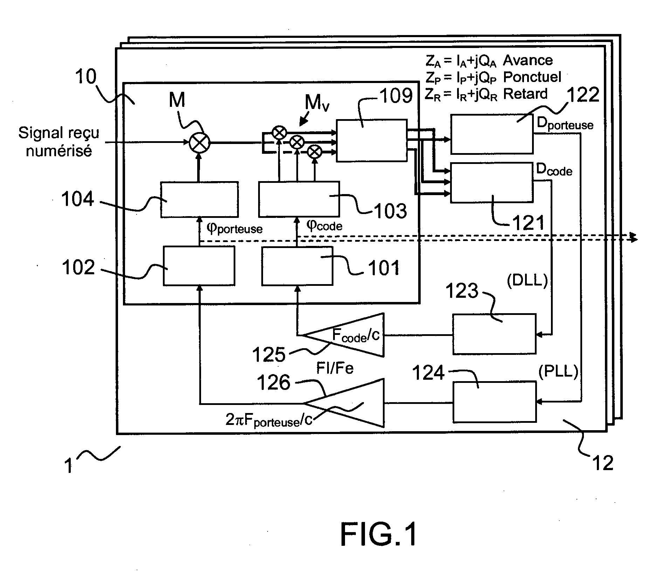

La figure 1 présente un schéma illustrant au moyen de blocs fonctionnels, un canal de traitement numérique d'un récepteur de positionnement par satellites.

En référence à la figure 1, un canal de traitement numérique 1 reçoit en entrée des signaux numérisés en provenance d'un satellite. Un dispositif de réception d'un système de positionnement par satellites comprend typiquement un canal de traitement numérique pour chaque satellite duquel il reçoit un signal à traiter. Par exemple, un dispositif de réception peut comprendre douze canaux, réalisés dans un composant électronique numérique intégré spécifique de type ASIC (selon l'acronyme correspondant à la terminologie anglaise "Application Specific Integrated Circuit") ou dans un composant numérique programmable de type FPGA (selon le sigle désignant la terminologie anglaise "Field Programmable Gate Array"). Un canal de traitement numérique 1 comprend un module matériel 10 et un module logiciel 12.

Le module matériel 10 reçoit en entrée des signaux numérisés provenant d'une chaîne de réception disposée en amont, et non représentée sur la figure.

Le module matériel 10 est configuré pour générer le code local et la porteuse locale, et pour les corréler ensuite avec le signal numérisé d'entrée. Il peut être cadencé à une fréquence relativement élevée, par exemple de l'ordre de 50 MHz. Il comprend un intégrateur numérique de phase de porteuse locale $NCO_P$ 102 générant à partir d'un premier signal de commande approprié la phase de la porteuse locale $\varphi_{porteuse}$. La phase de la porteuse locale $\varphi_{poneuse}$ permet la génération d'une porteuse locale complexe à partir d'un générateur de porteuse 104. Le module matériel 10 permet en premier lieu une démodulation de la porteuse, par une multiplication du signal numérisé par la porteuse locale complexe, au moyen d'un multiplicateur M.

Le module matériel 10 comprend également un intégrateur numérique de phase de code $NCO_C$ 101 commandé par un deuxième signal de commande approprié. L'intégrateur numérique de phase de code $NCO_C$ 101 est configuré pour générer une phase de code local $\varphi_{code}$. La phase de code local $\varphi_{code}$ commande un générateur de codes locaux 103 mettant en oeuvre le code d'étalement propre au satellite auquel le canal considéré est dédié. Le module matériel 10 permet en second lieu une démodulation du code, par une multiplication du signal démodulé en porteuse issu du multiplicateur M précité, par un code local géré par le générateur de codes locaux 103. Le générateur de codes locaux 103 peut générer une pluralité de codes locaux : le code local dit "ponctuel", ainsi que des codes locaux avancés ou retardés par rapport au code local ponctuel. Dans l'exemple illustré par la figure 1, le générateur de codes locaux 103 génère un code local ponctuel, un code local dit "retard", correspondant au code local ponctuel retardé d'un délai d par exemple égal à 0,5 chip, et un code local dit "avance", correspondant au code local ponctuel avancé du délai d.

Ainsi, la démodulation du code évoquée précédemment peut être réalisée en parallèle sur différentes voies correspondant aux différents codes locaux générés, au moyen d'une pluralité de multiplicateurs de corrélation Mv disposés en parallèle. Par exemple, dans le cas d'un corrélateur de type Double Delta, le générateur de codes locaux 103 peut générer cinq codes locaux : un code local ponctuel, un code local retard, un code local avance, ainsi qu'un code local dit "très retard" correspondant au code local ponctuel retardé d'un délai 2xd, et un code local dit "très avance" correspondant au code local ponctuel avancé du délai 2xd.

Les signaux en sortie des multiplicateurs de corrélation Mv peuvent alors être intégrés de manière cohérente par un intégrateur de corrélation 109, produisant des échantillons de signaux numérisés formant les voies de corrélation. Dans l'exemple illustré par la figure 1, trois voies de corrélation sont ainsi issues de l'intégrateur de corrélation 109 : une voie ponctuelle, une voie retard et une voie avance, formalisables par des signaux complexes, respectivement : $Z_P = I_P + jQ_P$, $Z_R = I_R + JQ_R$ et $Z_A = I_A + jQ_A$. Ces signaux complexes de corrélation peuvent alors être exploités par le module logiciel 12. Ainsi, l'intégrateur de corrélation 109 peut être cadencé à une fréquence plus basse, correspondant à la fréquence de travail du module logiciel 12, par exemple de l'ordre de 50 Hz. De la sorte, l'intégrateur de corrélation 109 réalise une intégration toutes les 20 ms ; celui-ci peut être un intégrateur à remise à zéro périodique, communément désigné suivant la terminologie anglaise "Integrate and Dump".

Le module logiciel 12 permet de générer les signaux de commande de l'intégrateur numérique de phase de porteuse locale $NCO_P$ 102 et de l'intégrateur numérique de phase de code $NCO_C$ 101, respectivement via l'asservissement d'une boucle de code DLL et d'une boucle de phase de porteuse PLL.

Les résultats complexes issus de l'intégrateur de corrélation 109 sont utilisés par le module logiciel 12 pour asservir la phase de la porteuse locale et la phase du code local, via les intégrateurs numériques correspondants 102, 101, de manière à ce que la porteuse locale soit en phase avec la porteuse reçue, et à ce que le code local de la voie ponctuelle soit en phase avec le code reçu, soit en d'autres termes que l'erreur de code soit nulle.

La boucle de code DLL comprend un discriminateur de code 121 recevant en entrée les différents signaux complexes issus des voies de corrélation formées par les sorties de l'intégrateur de corrélation 109, et restituant en sortie un signal représentatif $D_{code}$ d'une estimation de l'erreur de code $\tau$, c'est-à-dire de la différence entre la phase du code reçu $\varphi_{code\_reçu}$ et la phase du code local $\varphi_{code\_local}$. Le signal $D_{code}$ représentatif de l'estimation de l'erreur de code est fourni à un correcteur de code 123, ce dernier générant des commandes de code en vitesse, à la fréquence de travail du module logiciel 12, c'est-à-dire par exemple toutes les 20 ms. Les commandes de code en vitesse sont appliquées à l'entrée d'un amplificateur de commandes de code 125 restituant les deuxièmes signaux de commande en terme de nombre de chips par période d'échantillonnage à l'attention de l'intégrateur numérique de phase de code $NCO_C$ 101.

Un intégrateur numérique de phase ou NCO produit une phase, en cycles pour la porteuse, et en chips pour le code. A chaque cycle d'horloge ou hech - 1 hech correspondant à une période d'échantillonnage, soit l'inverse de la fréquence d'échantillonnage - le NCO incrémente la valeur de la phase de la valeur du signal de commande qu'il reçoit. Le signal de commande s'exprime ainsi en cycles par hech ou en chip par hech, calculée par le module logiciel 12 à partir d'une vitesse en mètres par seconde. Ainsi, le gain de l'amplificateur de commandes de code 125 peut s'écrire $G_{code} = (F_{code}/c)/F_e$, $F_{code}$ désignant la fréquence du code, $F_e$ la fréquence d'échantillonnage et c la vitesse de la lumière, et le gain de l'amplificateur de commandes de porteuse 126 peut s'écrire $G_{poneuse} = (F_{porteuse}/c)/F_e$.

D'une manière similaire, la boucle de phase de porteuse PLL comprend un discriminateur de porteuse 122 recevant en entrée le signal issu de la voie de corrélation ponctuelle formée par la sortie correspondante de l'intégrateur de corrélation 109, et restituant en sortie un signal représentatif $D_{porteuse}$ d'une estimation de l'erreur de phase de porteuse $\Delta\varphi$, c'est-à-dire de la différence entre la phase de porteuse du signal reçu $\varphi_{porteuse\_reçu}$ et la phase de porteuse locale $\varphi_{porteuse\_locale}$. Le signal représentatif $D_{porteuse}$ de l'erreur de phase de porteuse est fourni à un correcteur de porteuse 124, ce dernier générant des commandes de porteuse en vitesse, à la fréquence de travail du module logiciel 12. Les commandes de porteuse en vitesse sont appliquées à l'entrée d'un amplificateur de commandes de porteuse 126 restituant les premiers signaux de commande en terme de cycles par période d'échantillonnage à l'attention de l'intégrateur numérique de phase de porteuse locale $NCO_P$ 102.

La présente invention concerne particulièrement le discriminateur de code 121. Dans le souci d'une meilleure compréhension de la présente invention, des notations désignant différentes entités et variables physiques sont introduites ci-après, ainsi que des relations mathématiques s'y appliquant.

Pour la suite de l'exposé, il est introduit les notations suivantes:

$C_n(\varphi_{code})$ désigne le code d'étalement périodique d'un satellite n ;
$L_{code}$ désigne la période du code, en nombre entier de chips ;
$T_{chip}$ désigne la durée d'un créneau - ou chip - de code, en secondes : ainsi le produit $L_{code} \times T_{chip}$ désigne la période du code, en secondes ;
$R(\tau)$ désigne la fonction d'auto-corrélation du code, ainsi :

$$R(\tau) = 1 - |\tau| \qquad \text{si } |\tau| < 1,$$

$R(\tau) = 0$ sinon.

Pour un satellite n, $R(\tau)$ peut également s'écrire :

$$R(\tau) = R_{n,n}(\tau) = \frac{1}{L_{code}} \int_0^{L_{code}} C_n(u).C_n(u+\tau)du$$

Pour deux satellites n et p, le coefficient d'inter-corrélation peut s'écrire :

$$R_{n,p}(\tau) = \frac{1}{L_{code}} \int_0^{L_{code}} C_n(u).C_p(u+\tau)du$$ , ce coefficient ayant une valeur nulle ou quasiment nulle lorsque p est différent de n.

Le signal reçu en provenance d'un satellite à un instant t peut se formuler suivant la relation suivante :

$$S_{reçu}(t) = 2A.\cos\left(\varphi_{porteuse\_reçu}(t)\right)C_n\left(\varphi_{code\_reçu}(t)\right) + \Sigma(t),$$ A désignant l'amplitude du signal reçu et E(t) désignant les signaux provenant d'autres satellites et du bruit.

Le signal reçu peut également s'écrire suivant la relation suivante :

$$S_{reçu}(t) = A.\exp i\left(\varphi_{porteuse\_reçu}(t)\right)C_n\left(\varphi_{code\_reçu}(t)\right) + A.\exp i\left(-\varphi_{porteuse\_reçu}(t)\right)C_n\left(\varphi_{code\_reçu}(t)\right) + \Sigma(t)$$

A un instant t, les signaux locaux, respectivement avance, ponctuel et retard, issus du générateur de codes locaux 103 peuvent se formuler suivant les relations suivantes :

$$\begin{cases} S_{local\_avance}(t) = \exp i\left(-\varphi_{porteuse\_local}(t)\right)C_n\left(\varphi_{code\_local}(t) + d\right) \\ S_{local\_ponctuel}(t) = \exp i\left(-\varphi_{porteuse\_local}(t)\right)C_n\left(\varphi_{code\_local}(t)\right) \\ S_{local\_retard}(t) = \exp i\left(-\varphi_{porteuse\_local}(t)\right)C_n\left(\varphi_{code\_local}(t) - d\right) \end{cases}$$

Les signaux discrétisés appliqués à l'entrée de l'intégrateur de corrélation 109, correspondant respectivement aux signaux locaux avance, ponctuel et retard peuvent s'écrire suivant les relations suivantes :

$$\begin{cases} Z_A(k) = \dfrac{1}{T}\int_{kT}^{(k+1)T} S_{reçu}(t).S_{local\_avance}(t).dt \\ Z_P(k) = \dfrac{1}{T}\int_{kT}^{(k+1)T} S_{reçu}(t).S_{local\_ponctuel}(t).dt, \text{ où :} \\ Z_R(k) = \dfrac{1}{T}\int_{kT}^{(k+1)T} S_{reçu}(t).S_{local\_retard}(t).dt \end{cases}$$

T désigne le temps d'intégration cohérent, en nombre entier de périodes de code.
Les signaux complexes formant les voies de corrélation respectivement avance, ponctuelle et retard peuvent s'écrire suivant les relations suivantes :

$$\begin{cases} Z_A = A.\exp i(\Delta\varphi).R(\tau - d) + N \\ Z_P = A.\exp i(\Delta\varphi).R(\tau) + N \\ Z_R = A.\exp i(\Delta\varphi).R(\tau + d) + N \end{cases},$$

le terme N correspondant au bruit.

$$\Delta\varphi = \varphi_{porteuse\_reçue} - \varphi_{porteuse\_locale}$$

erreur de phase,

$$\tau = \varphi_{code\_reçu} - \varphi_{code\_local}$$

erreur de code.

Dans le cas d'un corrélateur de type Double Delta ou équivalent, des voies très avance et très retard peuvent être ajoutées, les signaux complexes y correspondant pouvant se formuler suivant les relations suivantes :

$$\begin{cases} Z_{TA} = A.\exp i(\Delta\varphi).R(\tau - 2d) + N \\ Z_{TR} = A.\exp i(\Delta\varphi).R(\tau + 2d) + N \end{cases}.$$

Dans le cas d'un discriminateur de code "classique", le signal représentatif $D_{code}$ caractéristique peut être défini suivant la relation suivante :

$$D_{code} = \frac{\mathrm{Re}\big[(Z_A - Z_R).\overline{Z}_P\big]}{\|Z_P\|^2} \qquad (1),$$

où :
Re désigne la partie réelle et $\overline{Z}$ désigne la valeur conjuguée du complexe Z.

En négligeant le terme de bruit N introduit précédemment, il est possible de reformuler le signal représentatif $D_{code}$ suivant la relation suivante :

$$D_{code} = \frac{R(\tau - d) - R(\tau + d)}{R(\tau)} \qquad (2).$$

En désignant $R_{Delta}(\tau)$ le numérateur dans la relation (2) ci-dessus, cette dernière peut s'écrire :

$$D_{code} = \frac{R_{Delta}(\tau)}{R(\tau)} \qquad (3).$$

Le signal représentatif $D_{code}$ caractéristique d'un corrélateur de type Double Delta peut être défini suivant la relation suivante :

$$D_{code} = \frac{\mathrm{Re}\big[(-Z_{TA} + 2.Z_A - 2.Z_R + Z_{TR}).\overline{Z}_P\big]}{\|Z_P\|^2} \qquad (4),$$

où :
La relation (4) ci-dessus peut également s'écrire de la manière suivante :

$$D_{code} = \frac{\mathrm{Re}\big[\{2.(Z_A - Z_R) - (Z_{TA} - Z_{TR}).\overline{Z}_P\big]}{\|Z_P\|^2} \qquad (5).$$

En négligeant le terme de bruit N introduit précédemment, il est possible de reformuler le signal représentatif $D_{code}$ suivant la relation suivante :

$$D_{code} = \frac{2.\left(R(\tau - d) - R(\tau + d)\right) - \left(R(\tau - 2d) - R(\tau + 2d)\right)}{R(\tau)} \qquad (6).$$

Il est à noter que la valeur de d peut être choisie typiquement inférieure à 0,25 chip dans le cas d'un corrélateur de type Double Delta.

En désignant $R_{Double\_Delta}(\tau)$ le numérateur dans la relation (6) ci-dessus, cette dernière peut s'écrire :

$$D_{code} = \frac{R_{Double\_Delta}(\tau)}{R(\tau)} \qquad (7).$$

Les courbes présentées ci-après sont des courbes théoriques, présentant toutes une symétrie autour de l'axe des ordonnées des repères dans lesquels elles sont représentées.

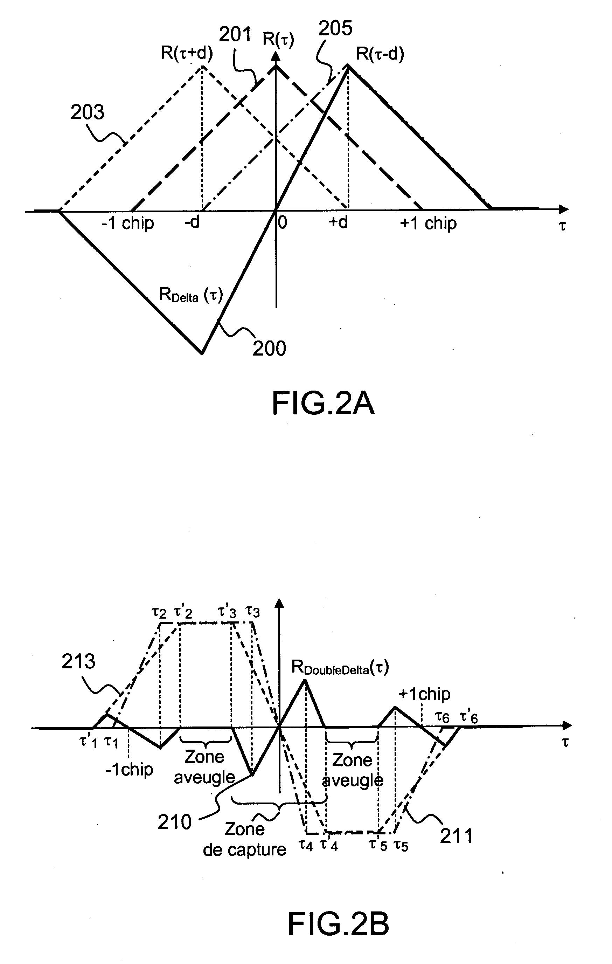

Les figures 2a et 2b présentent des courbes illustrant respectivement les caractéristiques de la fonction de corrélation : $R_{Delta}(\tau)$ avec un corrélateur classique, et $R_{Double\_Delta}(\tau)$ avec un corrélateur de type Double Delta.

En référence à la figure 2a, celle-ci présente une première courbe 201 représentant le coefficient d'inter-corrélation R en fonction de l'erreur de code $\tau$. La première courbe 201 correspond à un cas théorique, et présente une allure triangulaire, se caractérisant par une première zone linéaire croissante d'une valeur minimale nulle à une valeur maximale lorsque l'erreur de code $\tau$ varie entre -1 chip et 0, suivie d'une seconde zone linéaire décroissant jusqu'à une valeur minimale nulle lorsque l'erreur de code $\tau$ varie de 0 à 1 chip.

Une deuxième courbe 203 représente le coefficient d'inter-corrélation $R(\tau+d)$ correspondant à une voie retard. La deuxième courbe 203 est une translation de d=0,5 chip de la première courbe 201 vers la gauche le long de l'axe des abscisses.

Une troisième courbe 205 représente le coefficient d'inter-corrélation $R(\tau-d)$ correspondant à une voie avance. La troisième courbe 205 est une translation de d=0,5 chip de la première courbe 201 vers la droite le long de l'axe des abscisses.

Une courbe $R_{Delta}(\tau)$ 200 représente la fonction de corrélation $R_{Delta}(\tau)$ caractéristique d'un corrélateur classique, résultant d'une différence entre les première et deuxième courbes 203, 205 décrites ci-dessus. La fonction de corrélation $R_{Delta}(\tau)$ présente une valeur nulle pour les valeurs de l'erreur de code $\tau$ inférieures ou égales à -1,5 chip et supérieures ou égales à 1,5 chip. La courbe $R_{Delta}(\tau)$ 200 présente une première zone linéaire décroissante de 0 à une valeur minimale, lorsque l'erreur de code $\tau$ varie entre -1,5 chip et-d = -0,5 chip, puis une deuxième zone linéaire croissante de la valeur minimale à une valeur maximale, lorsque l'erreur de code $\tau$ varie entre -d = -0,5 chip et +d = +0,5 chip, la valeur de la fonction de corrélation $R_{Delta}(\tau)$ étant nulle lorsque l'erreur de code $\tau$ est nulle, puis une troisième zone linéaire décroissante de la valeur maximale à une valeur nulle, lorsque l'erreur de code $\tau$ varie entre d = +0,5 chip et 1,5 chip. Un corrélateur classique présente l'inconvénient d'être très sensible aux multi-trajets, induisant des erreurs de code pouvant être supérieures à 100 mètres.

Maintenant en référence à la figure 2b s'appliquant à un corrélateur de type Double Delta, celle-ci présente une première courbe 211 représentant la différence entre le coefficient d'inter-corrélation correspondant à la voie retard $R(\tau+d)$ et le coefficient d'inter-corrélation correspondant à la voie avance $R(\tau-d)$ en fonction de l'erreur de code $\tau$, cette différence correspondant au premier terme dans l'expression du coefficient de corrélation $R_{Double\_Delta}(\tau)$ donnée dans la relation (6) ci-dessus. La première courbe 211 se caractérise par une première zone, en-deçà d'une première valeur $\tau_1$ égale à -1-d de l'erreur de code $\tau$ dans l'exemple illustré par la figure, dans laquelle la fonction représentée est nulle. La première courbe 211 présente alors une première zone linéaire croissante jusqu'à une valeur maximale, lorsque l'erreur de code $\tau$ varie depuis ladite première valeur $\tau_1$ jusqu'à une deuxième valeur $\tau_2$ égale à -1+d, dans l'exemple illustré par la figure. La première courbe 211 présente alors un premier palier positif, lorsque l'erreur de code $\tau$ varie entre ladite deuxième valeur $\tau_2$ et une troisième valeur $\tau_3$ égale à -d dans l'exemple illustré par la figure. Le premier palier positif est suivi d'une deuxième zone linéaire décroissante depuis la valeur maximale jusqu'à une valeur minimale y opposée, lorsque l'erreur de code $\tau$ varie entre ladite troisième valeur $\tau_3$ et une quatrième valeur $\tau_4$ égale à +d opposée, la fonction représentée par la première courbe 211 prenant une valeur nulle lorsque l'erreur de code $\tau$ est nulle. La deuxième zone linéaire décroissante est suivie d'un second palier à la valeur minimale négative, lorsque l'erreur de code $\tau$ varie de ladite quatrième valeur $\tau_4$ à une cinquième valeur $\tau_5$ égale à 1-d, opposée de ladite deuxième valeur $\tau_2$. Le second palier est suivi d'une troisième zone linéaire croissante depuis la valeur minimale négative jusque 0, lorsque l'erreur de code $\tau$ varie entre ladite cinquième valeur $\tau_5$ et une sixième valeur $\tau_6$ égale à 1+d, opposée de ladite première valeur $\tau_1$. Dans la zone située au-delà de ladite sixième valeur $\tau_6$ le long de l'axe des abscisses, la fonction représentée par la première courbe 211 prend à nouveau une valeur nulle.

Une deuxième courbe 213 représente la différence entre le coefficient d'inter-corrélation correspondant à la voie très retard R($\tau$+2d) et le coefficient d'inter-corrélation correspondant à la voie très avance R($\tau$-2d) en fonction de l'erreur de code $\tau$, cette différence correspondant au second terme de l'expression du coefficient de corrélation $R_{DoUble\_Delta}(\tau)$ donnée dans la relation (6) ci-dessus. L'allure globale de la deuxième courbe 213 est similaire à celle de la première courbe 211 décrite précédemment, en ce que la deuxième courbe 213 présente également trois zones linéaires : une première zone linéaire croissante de 0 à la valeur maximale positive lorsque l'erreur de code $\tau$ varie entre une première valeur $\tau'_1$ égale à -1-2.d et une deuxième valeur $\tau'_2$ égale à -1 +2.d, une deuxième zone linéaire décroissante de la valeur maximale positive à la valeur minimale négative opposée lorsque l'erreur de code $\tau$ varie entre une troisième valeur $\tau'_3$ égale à -2.d et une quatrième valeur $\tau'_4$ égale à +2.d opposée, et une troisième zone linéaire croissante de la valeur minimale négative à zéro lorsque l'erreur de code $\tau$ varie entre une cinquième valeur $\tau'_5$ égale à +1-2.d et une sixième valeur $\tau'_6$ égale à +1 +2.d. La deuxième courbe 213 présente également un premier palier et un second palier, le premier palier étant à la valeur maximale positive, et s'étendant de la deuxième valeur $\tau'_2$ à la troisième valeur $\tau'_3$, et le second palier étant à la valeur minimale négative, et s'étendant de la quatrième valeur $\tau'_4$ à la cinquième valeur $\tau'_5$, la fonction représentée par la deuxième courbe 213 prenant une valeur nulle en-deçà de la première valeur $\tau'_1$ et au-delà de la sixième valeur $\tau'_6$. La deuxième courbe 213 se distingue de la première courbe 211 en ce que la première valeur $\tau'_1$ propre à la deuxième courbe 213 est inférieure à la première valeur $\tau_1$ propre à la première courbe 211, la deuxième valeur $\tau_2$ propre à la deuxième courbe 213 est supérieure à la deuxième valeur $\tau_2$ propre à la première courbe 211, la troisième valeur $\tau'_3$ propre à la deuxième courbe 213 est inférieure à la troisième valeur $\tau_3$ propre à la première courbe 211, la quatrième valeur $\tau'_4$ propre à la deuxième courbe 213 est supérieure à la quatrième valeur $\tau_4$ propre à la première courbe 211, la cinquième valeur $\tau'_5$ propre à la deuxième courbe 213 est inférieure à la cinquième valeur $\tau_5$ propre à la première courbe 211, et la sixième valeur $\tau'_6$ propre à la deuxième courbe 213 est supérieure à la sixième valeur $\tau_6$ propre à la première courbe 211.

Une courbe $R_{Double\_Delta}(\tau)$ 210 représente la fonction de corrélation $R_{Double\_Delta}(\tau)$ caractéristique d'un corrélateur Double Delta, résultant d'une différence entre les deuxième et première courbes 213, 211 décrites ci-dessus.

La partie centrale de la courbe $R_{Double\_Delta}(\tau)$ 210, de part et d'autre de l'axe des ordonnées du repère, présente globalement la même allure que la courbe caractéristique de la fonction de corrélation $R_{Delta}(\tau)$ illustrée dans la figure 2a par la courbe $R_{Delta}(\tau)$ 200. La zone correspondant à cette partie centrale est dite "zone de capture". Une spécificité et un avantage d'un corrélateur de type Double Delta, est liée au fait que la fonction de corrélation $R_{Double\_Delta}(\tau)$ prend une valeur nulle dans des zones aveugles coïncidant avec les paliers présentés par la deuxième courbe 213 décrite précédemment. Un avantage procuré par ces zones aveugles est que des signaux issus de phénomènes de multi-trajet présentant un retard s'inscrivant dans une zone aveugle, n'affectent pas le discriminateur de code, et sont donc sans effet sur l'erreur de code. Ainsi, un corrélateur de type Double Delta permet une insensibilité à des multi-trajets dont le retard est supérieur à 2.d. Il est à observer qu'au-delà des zones aveugles, le discriminateur entre dans une zone instable, ramenant l'erreur de code au sein de la zone aveugle si la valeur absolue de l'erreur de code est inférieure à 1 chip, et pousse à l'extérieur sinon. Pour des erreurs de code supérieures à 1+2d chip en valeur absolue, la corrélation ne fournit plus que du bruit : les récepteurs de positionnement peuvent comprendre un estimateur de rapport signal à bruit permettant avantageusement de détecter de tels cas et de relancer un processus d'acquisition.

Selon une spécificité de la présente invention, il est proposé d'utiliser les voies de corrélation existantes afin d'élaborer une fonction de détection de faux accrochages. La fonction de détection de faux accrochages peut être construite, à l'instar d'un discriminateur de code, à partir d'une combinaison des voies de corrélation.

Par exemple, il est possible, dans un mode de réalisation particulier de l'invention, d'élaborer la fonction de détection de faux accrochages en utilisant une combinaison linéaire des voies sur lesquelles un corrélateur de type Double Delta est fondé, c'est-à-dire à partir des trois voies très avance, ponctuelle et très retard. Ce mode de réalisation particulier présente l'avantage d'utiliser les mêmes voies de corrélation que celles utilisées par le corrélateur de type Double Delta ou équivalent, pour la poursuite.

La fonction de détection de faux accrochages peut selon cet exemple de réalisation particulier être assimilée à une valeur formulée suivant les relations suivantes :

$$Détecteur = \frac{\mathrm{Re}\left[(-Z_{TA} + 2.Z_P - Z_{TR}).\overline{Z}_P\right]}{\|Z_P\|^2} \qquad (8).$$

En négligeant le bruit, la relation (8) ci-dessus peut être reformulée de la manière suivante :

$$Détecteur = \frac{-(R(\tau - 2d) - +2.R(\tau) - R(\tau + 2d))}{R(\tau)} \qquad (9),$$

ou
encore :

$$Détecteur = \frac{2.R(\tau) - (R(\tau - 2d) + R(\tau + 2d))}{R(\tau)} \qquad (10).$$

Dans la relation (10) ci-dessus, les termes exprimant les fonctions de corrélation issues de codes locaux décalés par rapport au code local ponctuel ont été isolés des termes exprimant les fonctions de corrélation issues du code local ponctuel.

En désignant $R_{Détecteur}(\tau)$ le numérateur dans la relation (10) ci-dessus, cette dernière peut s'écrire :

$$Détecteur = \frac{R_{Détecteur}(\tau)}{R(\tau)} \qquad (11).$$

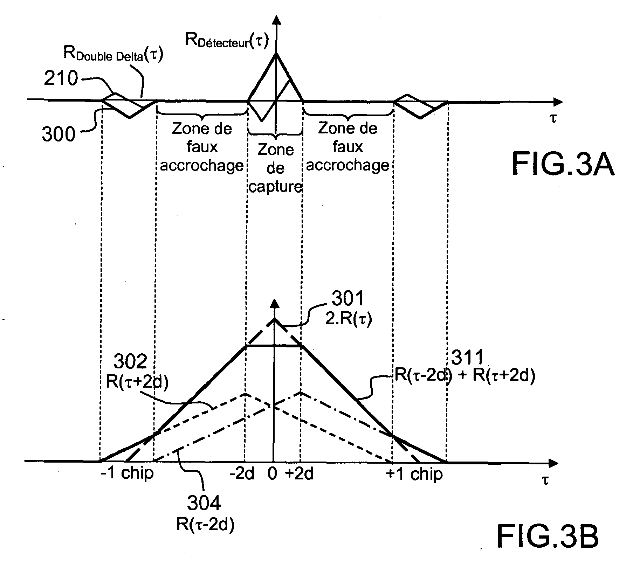

Les figures 3a et 3b présentent des courbes illustrant notamment les caractéristiques d'une fonction de détection de faux accrochages telle que définie par les relations (8) à (11) ci-dessus.

La figure 3a présente la courbe $R_{Double\_Delta}(\tau)$ 210 déjà décrite précédemment en référence à la figure 2b. Dans un même repère, est également présentée une courbe $R_{Détecteur}(\tau)$ 300 caractéristique de la fonction de détection de faux accrochages telle que définie précédemment.

La courbe $R_{Détecteur}(\tau)$ 300 se caractérise par une allure triangulaire au sein de la zone de capture, et présente son pic maximum pour une erreur de code $\tau$ nulle. En dehors de la zone de capture, la fonction $R_{Détecteur}(\tau)$ présente la spécificité d'être nulle, ou bien inférieure à 0. Notamment la fonction $R_{Détecteur}(\tau)$ prend une valeur nulle dans les zones aveugles, propices à des faux accrochages.

La figure 3b présente les courbes caractéristiques des différents termes contenus dans la relation linéaire définissant la fonction $R_{Détecteur}(\tau)$, c'est-à-dire des différents termes contenus dans l'expression du numérateur dans la relation (10) ci-dessus.

Une première courbe 301 représente la caractéristique du terme $2.R(\tau)$. La première courbe 301 est similaire à la première courbe 201 décrite précédemment en référence à la figure 2a, à l'exception que les pentes des zones linéaires croissante et décroissante sont deux fois plus grandes, et la valeur maximale du pic est deux fois plus élevée.

Deux courbes intermédiaires 302, 304 représentent respectivement la caractéristique du terme $R(\tau+2d)$ et la caractéristique du terme $R(\tau-2d)$. L'allure des courbes intermédiaires 302, 304 est similaire à celle des deux courbes 203, 205 décrites précédemment en référence à la figure 2a, à l'exception du fait que celles-ci sont translatées d'un délai égal à 2d.

Une deuxième courbe 311 résulte de la somme des deux courbes 302, 304 et représente la caractéristique du terme $R(\tau-2d)+R(\tau+2d)$. Il s'agit là du terme comprenant les fonctions de corrélation issues de codes locaux décalés par rapport au code local ponctuel, ainsi qu'exprimé dans la relation (10) ci-dessus, dans laquelle ce terme a été isolé.

Les zones aveugles du discriminateur de code correspondent aux zones linéaires de la fonction d'auto-corrélation du code. La présente invention se fonde sur ce principe, et propose d'élaborer une combinaison linéaire des voies de corrélation décalées prenant une valeur nulle dans ces zones linéaires, et non nulle pour une erreur de code nulle, de manière à définir une fonction de détection de faux accrochages. Le principe général de la présente invention est explicité ci-après.

Selon le principe de la présente invention, la fonction de détection de faux accrochages doit présenter une valeur nulle dans les zones aveugles du discriminateur de code utilisé. Dans le cas général où une pluralité de voies de corrélation - chaque voie de corrélation résultant d'un code local présentant un délai $d_i$, positif (avance) ou négatif (retard), par rapport au code local ponctuel - offrent une pluralité n de signaux complexes $Z_i$, la fonction de détection de faux accrochages peut être assimilée à une valeur formulée suivant la relation suivante :

$$Détecteur = \frac{\text{Re}\left[Z_I.\overline{Z}_P\right]}{\left\|Z_P\right\|^2} \qquad (12),$$

où :

$Z_I$ désigne une combinaison linéaire des différents signaux complexes, soit :

$$Z_I = \sum_{i=1}^{i=n} \alpha_i.Z_i \qquad (13).$$

Dans la relation (13) ci-dessus, les termes $\alpha_i$ désignent les paramètres de pondérations, nombres entiers positifs ou négatifs.

Pour que la fonction de détection de faux accrochages soit nulle lorsque les zones linéaires croissantes ou décroissantes de la fonction d'auto-corrélation ou coefficient d'inter-corrélation $R(\tau)$ correspondant à la voie de corrélation ponctuelle, il est nécessaire et suffisant que les relations suivantes soient vérifiées :

$$\begin{cases} \sum_{i=1}^{i=n} \alpha_i = 0 \\ \sum_{i=1}^{i=n} d_i.\alpha_i = 0 \end{cases} \qquad (14).$$

Il est par exemple possible, dans un mode de réalisation de l'invention, que la fonction de détection se base sur les trois voies de corrélation traditionnelles (ponctuelle / avance / retard), et de choisir les coefficients de pondération suivants et les délais suivants :

$$\begin{cases} (\alpha_1; \alpha_2; \alpha_3) = (-1; 2; -1) \\ (d_1; d_2; d_3) = (-d; 0; +d) \end{cases}.$$

Il est par exemple également possible que la fonction de détection repose sur le choix suivant des coefficients de pondération suivants et les délais :

$$\begin{cases} (\alpha_1; \alpha_2; \alpha_3; \alpha_4) = (-1; 1; 1; -1) \\ (d_1; d_2; d_3; d_4) = (-2d; -d; +d; +2d) \end{cases}$$

La fonction de détection de faux accrochages peut être utilisée dans le but de délivrer un signal d'alerte, lorsque celle-ci dépasse par exemple une valeur de seuil.

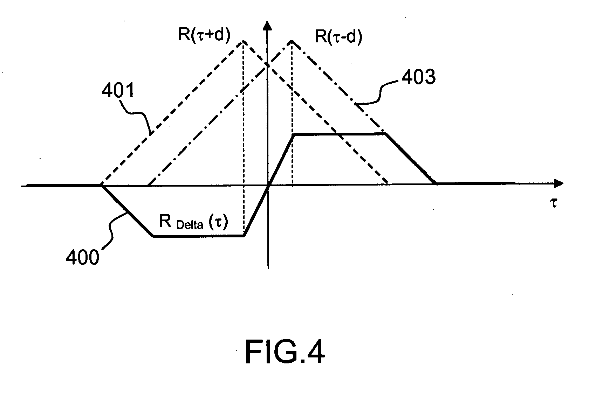

Avantageusement, la fonction de détection de faux accrochages peut être comparée à une valeur de seuil, le franchissement de la valeur de seuil pouvant par exemple déclencher la commutation de la boucle de code depuis un premier discriminateur de code (par exemple un discriminateur de code de type Double Delta) à un second discriminateur, par exemple de type discriminateur étroit. Un discriminateur de code de type corrélateur étroit est décrit en détails, en référence à la figure 4 ci-après.

Un discriminateur de code de type corrélateur étroit utilise les voies de corrélation avance, ponctuelle et retard. Un corrélateur étroit peut être défini d'une manière similaire à un corrélateur classique, notamment par les relations (1) à (3) présentées précédemment. A la différence d'un corrélateur classique pour lequel le délai d est égal à 0,5 chip, ce dernier est moindre dans le cas d'un corrélateur étroit, et est typiquement égal à 0,1 chip.

La figure 4 présente une courbe illustrant la caractéristique de la fonction de corrélation avec un discriminateur de code de type corrélateur étroit.

D'une manière similaire à la figure 2a décrite précédemment, la figure 4 présente une première courbe 401 représentant le coefficient d'inter-corrélation $R(\tau+d)$ correspondant à une voie retard. La première courbe 401 est similaire à la deuxième courbe 203 de la figure 2a.

Une deuxième courbe 403 représente le coefficient d'inter-corrélation R($\tau$+d) correspondant à une voie retard. La deuxième courbe 403 est similaire à la troisième courbe 205 de la figure 2a.

Une courbe R$_{Delta}$($\tau$) 400 représente la caractéristique de la fonction R$_{Delta}$($\tau$) résultant d'une différence entre la deuxième courbe 403 et la première courbe 401. La fonction R$_{Delta}$($\tau$) prend une valeur nulle pour les valeurs de l'erreur de code $\tau$ inférieures à -1-d chip. La fonction R$_{Delta}$($\tau$) présente alors une première zone linéaire décroissante jusqu'à une valeur minimale négative, lorsque l'erreur de code $\tau$ varie de -1-d à -1+d chip. La fonction R$_{Delta}$($\tau$) présente alors un premier palier négatif à ladite valeur minimale négative, lorsque l'erreur de code $\tau$ varie de -1 +d à -d chip. Le premier palier négatif est suivi d'une deuxième zone linéaire croissante jusqu'à une valeur maximale positive, lorsque l'erreur de code $\tau$ varie de -d à +d chip. La fonction R$_{Delta}$($\tau$) présente alors un second palier positif à ladite valeur maximale positive, lorsque l'erreur de code $\tau$ varie de +d à 1-d chip. Le second palier est suivi d'une troisième zone linéaire décroissante jusqu'à 0, lorsque l'erreur de code $\tau$ varie de 1-d à 1+d chip. Pour les valeurs de l'erreur de code $\tau$ supérieures à 1+d chip, la fonction R$_{Delta}$($\tau$) prend une valeur nulle.

Les deux paliers se traduisent par une limitation de la sensibilité du discriminateur de code aux multi-trajets.

Il est maintenant décrit un mode de fonctionnement d'un récepteur de positionnement se basant sur une fonction de détection de faux accrochages selon l'un des modes de réalisation décrits.

Au préalable de la fermeture de la boucle de code DLL avec un discriminateur de code de type Double Delta, à l'issue de la phase d'acquisition, le récepteur peut utiliser un corrélateur étroit afin d'assurer que l'erreur converge dans la zone de capture du discriminateur Double Delta. Des moyens de comparaison, par exemple mis en oeuvre dans le module logiciel 12 décrit précédemment, peuvent alors être configurés pour réaliser une comparaison entre la valeur de la fonction de détection de faux accrochages avec un seuil, et des moyens de commutation peuvent par exemple permettre un basculement sur le discriminateur Double Delta lorsque la valeur de la fonction de détection passe au-dessus d'une valeur de seuil, le corrélateur étroit demeurant par exemple utilisé tant que ladite valeur demeure en-dessous de la valeur de seuil.

Avantageusement, les moyens de commutation peuvent être basés sur une fonction hystérésis, dans le but de limiter des commutations intempestives entre les différents discriminateurs. Ainsi, les moyens de commutation peuvent par exemple permettre un basculement sur le discriminateur Double Delta lorsque la valeur de la fonction de détection passe au-dessus d'une première valeur de seuil, une commutation sur le commutateur étroit ne pouvant subséquemment être réalisée que si la fonction de détection passe au-dessous d'une seconde valeur de seuil, inférieure à ladite première valeur de seuil.

Avantageusement encore, la valeur de seuil ou les valeurs de seuil peuvent être modifiées en temps réel, par exemple si le récepteur est équipé de moyen d'estimation du rapport signal à bruit : les valeurs de seuil peuvent par exemple être augmentée lorsque le rapport signal à bruit estimé augmente.

Avantageusement, pendant des phases de poursuite, il est possible de commuter sur le corrélateur étroit lorsque la valeur de la fonction de détection de faux accrochages passe en-dessous d'une valeur de seuil, par exemple pendant la période nécessaire pour que l'erreur de code revienne dans la zone de capture du corrélateur Double Delta. D'une manière similaire au mode de réalisation décrit ci-dessus, une fonction de type hystérésis peut également être envisagée, de manière à ce que le retour sur le corrélateur de type Double Delta ne puisse être déclenché que lorsque la fonction de détection repasse au-dessus d'une seconde valeur de seuil.

Il est à observer que la fonction de détection de faux accrochages peut être perturbée par du bruit, et le déclenchement de fausses alarmes, ou de commutations indésirables peut en être la conséquence. Pour remédier à ce phénomène, il est possible d'augmenter la valeur du seuil d'une marge. Cependant, afin de minimiser la valeur de cette marge sans réduire la zone de tolérance sur l'erreur de code, il est possible, avantageusement, d'appliquer des moyens de filtrage appropriés sur la fonction de détection de faux accrochages, dans un but de réduire l'influence du bruit. Les moyens de filtrage peuvent par exemple consister en un filtre de premier ordre.

En outre, du fait de l'inter-corrélation des signaux de bruit entre les différentes voies de corrélation, par exemple ponctuelle, très avance et très retard, la fonction de détection des faux accrochages peut présenter un biais par rapport aux configurations exemptes de bruit. Un tel biais peut être gênant pour le positionnement de la valeur du seuil de détection.

Ainsi avantageusement, des moyens additionnels d'estimation de biais peuvent permettre une estimation de ce biais, et la valeur estimée peut être soustraite à la fonction de détection afin de s'affranchir du phénomène de biais.

Afin d'estimer le biais de manière optimale, c'est-à-dire notamment afin que l'estimation de biais ne soit pas significativement affectée par la présence du signal provenant du satellite et ses multi-trajets, les moyens d'estimation de biais peuvent se baser sur des voies de corrélation additionnelles issues de codes locaux retardés ou avancés par rapport au code local ponctuel, d'un délai d supérieur à 1 chip. Ainsi de telles voies de corrélation additionnelles présenteront des propriétés d'inter-corrélation identiques, mais ne restitueront que du bruit. Une fonction de détection de faux accrochages telle que décrite précédemment, mais se fondant sur ces voies additionnelles de corrélation, associée à un filtrage approprié, peut former les moyens d'estimation du biais. Par exemple, deux fonctions de détection de faux accrochages similaires peuvent être réalisées, une première d'entre elles étant basée à l'instar des modes de réalisation décrits ci-dessus sur des voies de corrélation issues de codes locaux ponctuel et décalés par rapport au code local ponctuel, et une seconde étant basée sur des voies de corrélation issues de codes locaux décalés d'un retard (ou d'une avance) déterminée d'un délai supérieur à 1 chip. La fonction de détection de faux accrochages peut alors être égale au résultat de ladite première fonction auquel est soustrait le résultat de ladite seconde fonction. Le filtrage approprié peut par exemple être réalisé avec une constante de temps plus grande sur la seconde fonction de corrélation, dans le but de minimiser le bruit avant l'opération de soustraction précitée.

Il est à noter que de telles voies de corrélation additionnelles peuvent être déjà disponibles dans certains types de récepteurs, utilisant des multi-corrélateurs aux fins d'accélérer les phases d'acquisition.

**Revendications**

1. Dispositif de réception d'un système de positionnement par satellite, comprenant au moins un canal de réception (1) configuré pour traiter un signal numérisé reçu provenant d'un signal hyperfréquence émis par un satellite déterminé offrant un code d'étalement propre, chaque canal de réception (1) comprenant au moins :

   • des moyens de génération (102,104) d'une porteuse locale,
   • des moyens de démodulation (m) du signal numérisé reçu par la porteuse locale,
   • des moyens de génération (101, 103) d'un code local ponctuel correspondant audit code d'étalement du satellite, les moyens de génération générant également une pluralité n de codes locaux décalés par rapport au code local ponctuel de délais $d_i$ non nuls,
   • des moyens de corrélation (Mv) configurés pour déterminer des signaux représentatifs de coefficients de corrélation entre le signal reçu démodulé par la porteuse locale et les codes locaux formant autant de voies de corrélation,

   les signaux restitués par lesdits moyens de corrélation étant traités par un intégrateur de corrélation (109) restituant des signaux complexes $Z_i$ correspondant à des voies de corrélation respectives,
   le dispositif de réception étant **caractérisé en ce que** chaque canal de réception (1) comprend en outre des moyens de détermination d'une fonction de détection de faux accrochages déterminée à partir desdits signaux complexes suivant la relation :

$$Détecteur = \frac{\text{Re}\left[Z_I . \bar{Z}_P\right]}{\left\|Z_P\right\|^2},$$

   dans laquelle $Z_P$ désigne le signal complexe issue de la voie de corrélation du signal numérisé reçu avec le code local ponctuel, et $Z_I$ désigne une combinaison linéaire desdits signaux complexes $Z_i$ associés à des coefficients de pondération respectifs $\alpha_i$, lesdits délais $d_i$ et coefficients de pondération $\alpha_i$ vérifiant la relation suivante :

$$\begin{cases} \sum\limits_{i=1}^{i=n} \alpha_i = 0 \\ \sum\limits_{i=1}^{i=n} d_i . \alpha_i = 0 \end{cases}.$$

2. Dispositif de réception selon la revendication 1, **caractérisé en ce qu'**un intégrateur de corrélation (109) traite les signaux restitués par lesdits moyens de corrélation pour une pluralité de voies de corrélation déterminées, les signaux complexes $Z_i$ étant issus de l'intégrateur de corrélation (109) étant traités par au moins un discriminateur de code (121) restituant un signal commandant une boucle de code (DLL), une pluralité des signaux parmi les signaux complexes $Z_i$ étant exploitée par la fonction de détection de faux accrochages.

3. Dispositif de réception selon la revendication 2, **caractérisé en ce qu'**il comprend cinq voies de corrélation :

• une voie de corrélation ponctuelle élaborée à partir du code local ponctuel,
• une voie de corrélation retard élaborée à partir d'un code local décalé du code local ponctuel d'un délai d,
• une voie de corrélation très retard élaborée à partir d'un code local décalé du code local ponctuel d'un délai 2d,
• une voie de corrélation avance élaborée à partir d'un code local décalé du code local ponctuel d'un délai -d et
• une voie de corrélation très avance élaborée à partir d'un code local décalé du code local ponctuel d'un délai -2d,

la fonction de détection de faux accrochages étant élaborée à partir des signaux complexes et définie suivant la relation :

$$Détecteur = \frac{\mathrm{Re}\left[(-Z_{TA} + 2.Z_P - Z_{TR}).\bar{Z}_P\right]}{\|Z_P\|^2}.$$

4. Dispositif de réception selon la revendication 2, **caractérisé en ce qu'**il comprend cinq voies de corrélation :

• une voie de corrélation ponctuelle élaborée à partir du code local ponctuel,
• une voie de corrélation retard élaborée à partir d'un code local décalé du code local ponctuel d'un délai d,
• une voie de corrélation très retard élaborée à partir d'un code local décalé du code local ponctuel d'un délai 2d,
• une voie de corrélation avance élaborée à partir d'un code local décalé du code local ponctuel d'un délai -d et
• une voie de corrélation très avance élaborée à partir d'un code local décalé du code local ponctuel d'un délai -2d,

le discriminateur de code (121) élaborant un signal $D_{code}$ formé par une combinaison linéaire des signaux complexes, respectivement désignés $Z_P$, $Z_R$, $Z_{TR}$, $Z_A$, $Z_{TA}$ issus desdites voies de corrélation suivant la relation :

$$D_{code} = \frac{\mathrm{Re}\left[\{2.(Z_A - Z_R) - (Z_{TA} - Z_{TR}).\bar{Z}_P\right]}{\|Z_P\|^2},$$

la fonction de détection de faux accrochages étant élaborée à partir des mêmes signaux complexes et définie suivant la relation :

$$Détecteur = \frac{\mathrm{Re}\left[(-Z_{TA} + 2.Z_P - Z_{TR}).\bar{Z}_P\right]}{\|Z_P\|^2}.$$

5. Dispositif de réception selon l'une quelconque des revendications précédentes, **caractérisé en ce qu'**il comprend en outre des moyens de comparaison configurés pour comparer la valeur de ladite fonction de détection de faux accrochages à une valeur de seuil.

6. Dispositif de réception selon la revendication 5, **caractérisé en ce qu'**il comprend des moyens d'alerte, configurés pour être déclenchés lorsque ladite valeur de seuil est franchie par ladite fonction de détection de faux accrochages.

7. Dispositif de réception selon l'une quelconque des revendications 5 et 6 lorsqu'elles dépendent de la revendication 2 ou 3, **caractérisé en ce qu'**il comprend en outre des moyens de commutation configurés pour activer un premier discriminateur de code (121) lorsque ladite fonction de détection de faux accrochages est inférieure à ladite valeur de seuil, ou un second discriminateur de code (121) lorsque ladite fonction de détection de faux accrochages est supérieure à ladite valeur de seuil.

8. Dispositif de réception selon l'une quelconque des revendications 5 et 6 lorsqu'elles dépendent de la revendication 2 ou 3, **caractérisé en ce qu'**il comprend en outre des moyens de commutation configurés pour activer un second discriminateur de code (121) lorsque ladite fonction de détection de faux accrochages dépasse une première valeur de seuil, et à activer un premier discriminateur de code (121) lorsque ladite fonction de détection de faux accrochages repasse au-dessous d'une seconde valeur de seuil inférieure à ladite première valeur de seuil.

**9.** Dispositif de réception selon l'une quelconque des revendications 7 et 8, dans lequel ledit premier discriminateur de code (121) est de type corrélateur étroit, et ledit second discriminateur de code (121) est de type corrélateur Double Delta.

**10.** Dispositif de réception selon l'une quelconque des revendications 5 à 9 **caractérisé en ce que** ladite ou lesdites valeurs de seuil sont prédéterminées.

**11.** Dispositif de réception selon l'une quelconque des revendications 5 à 9 comprenant en outre des moyens d'estimation du rapport signal à bruit du signal reçu, **caractérisé en ce que** ladite ou lesdites valeurs de seuil sont ajustées en fonction du rapport signal à bruit estimé par lesdits moyens d'estimation du rapport signal à bruit.

**12.** Dispositif de réception selon l'une quelconque des revendications précédentes, **caractérisé en ce qu'**il comprend en outre des moyens de filtrage de bruit s'appliquant à la fonction de détection de faux accrochages.

**13.** Dispositif de réception selon l'une quelconque des revendications précédentes, **caractérisé en ce qu'**il comprend en outre des moyens d'estimation de biais, formés par une seconde fonction de détection de faux accrochages déterminée à partir de signaux complexes correspondant à des voies de corrélation additionnelles formées à partir de codes locaux décalés entre eux et décalés par rapport au code local ponctuel d'une avance ou d'une retard supérieur à 1 chip.

**Patentansprüche**

**1.** Empfangsvorrichtung für ein Satellitenpositionierungssystem, die wenigstens einen Empfangskanal (1) zum Verarbeiten eines empfangenen digitalisierten Signals umfasst, das von einem Mikrowellensignal stammt, das von einem ermittelten Satelliten gesendet wurde, der einen speziellen Spreizcode bereitstellt, wobei jeder Empfangskanal (1) wenigstens Folgendes umfasst:

- Mittel (102, 104) zum Erzeugen eines lokalen Trägers;
- Mittel (m) zum Demodulieren des von dem lokalen Träger empfangenen digitalisierten Signals;
- Mittel (101, 103) zum Erzeugen eines pünktlichen Lokalcode, der dem Spreizcode des Satelliten entspricht, wobei die Erzeugungsmittel auch eine Mehrzahl n von Lokalcodes erzeugen, die relativ zu dem pünktlichen Lokalcode um Verzögerungen $d_i$ von ungleich null verschoben sind;
- Korrelationsmittel ($M_V$) zum Ermitteln von Signalen, die Korrelationskoeffizienten zwischen dem von dem lokalen Träger demodulierten empfangenen Signal und den ebenso viele Korrelationskanäle bildenden Lokalcodes repräsentieren,

wobei die von den Korrelationsmitteln ausgegebenen Signale von einem Korrelationsintegrator (109) verarbeitet werden, der komplexe Signale $Z_i$ ausgibt, die jeweiligen Korrelationskanälen entsprechen,
wobei die Empfangsvorrichtung **dadurch gekennzeichnet ist, dass** jeder Empfangskanal (1) ferner Mittel zum Ermitteln einer Funktion zum Erkennen von falschen Aufschaltungen umfasst, die auf der Basis der komplexen Signale gemäß der folgenden Beziehung ermittelt wurden:

$$\text{Detektor} = \frac{\mathrm{Re}[Z_I . \bar{Z}_P]}{\|Z_P\|^2}$$

wobei $Z_P$ das komplexe Signal bezeichnet, das vom Korrelationskanal des mit dem pünktlichen Lokalcode empfangenen digitalisierten Signals kommt, und $Z_i$ eine lineare Kombination der komplexen Signale $Z_i$ bezeichnet, die mit jeweiligen Gewichtungskoeffizienten $\alpha_i$ assoziiert sind, wobei die Verzögerungen $d_i$ und Gewichtungskoeffizienten $\alpha_i$ der folgenden Beziehung entsprechen:

$$\begin{cases} \sum_{i=1}^{i=n} \alpha_i = 0 \\ \sum_{i=1}^{i=n} d_i . \alpha_i = 0 \end{cases}$$

.

**2.** Empfangsvorrichtung nach Anspruch 1, **dadurch gekennzeichnet, dass** ein Korrelationsintegrator (109) die von den Korrelationsmitteln ausgegebenen Signale für mehrere ermittelte Korrelationskanäle verarbeitet, wobei die vom Korrelationsintegrator (109) kommenden komplexen Signale $Z_i$ von wenigstens einem Code-Diskriminator (121) verarbeitet werden, der ein Signal ausgibt, das eine Codeschleife (DLL) steuert, wobei eine Mehrzahl der Signale unter den komplexen Signalen $Z_i$ für die Funktion des Erkennens von falschen Aufschaltungen benutzt wird.

**3.** Empfangsvorrichtung nach Anspruch 2, **dadurch gekennzeichnet, dass** sie fünf Korrelationskanäle umfasst:

• einen von dem pünktlichen Lokalcode entwickelten pünktlichen Korrelationskanal;
• einen verzögerten Korrelationskanal, der von einem von dem pünktlichen Localcode um eine Verzögerung d verschobenen Lokalcode entwickelt wurde;
• einen stark verzögerten Korrelationskanal, der von einem von dem pünktlichen Lokalcode um eine Verzögerung 2d verschobenen Lokalcode entwickelt wurde;
• einen voreilenden Korrelationskanal, der von einem von dem pünktlichen Lokalcode um eine Verzögerung -d verschobenen Lokalcode entwickelt wurde; und
• einen stark voreilenden Korrelationskanal, der von einem von dem pünktlichen Lokalcode um eine Verzögerung -2d verschobenen Lokalcode entwickelt wurde;

wobei die Funktion zum Erkennen von falschen Aufschaltungen der komplexen Signalen entwickelt wird und gemäß der folgenden Beziehung definiert wird:

$$\text{Detektor} = \frac{\text{Re}\left[(-Z_{TA} + 2.Z_P - Z_{TR})\bar{Z}_P\right]}{\|Z_P\|^2}$$

**4.** Empfangsvorrichtung nach Anspruch 2, **dadurch gekennzeichnet, dass** sie fünf Korrelationskanäle umfasst:

• einen von dem pünktlichen Lokalcode entwickelten pünktlichen Korrelationskanal;
• einen verzögerten Korrelationskanal, der von einem von dem pünktlichen Lokalcode um eine Verzögerung d verschobenen Lokalcode entwickelt wurde;
• einen stark verzögerten Korrelationskanal, der von einem von dem pünktlichen Lokalcode um eine Verzögerung 2d verschobenen Lokalcode entwickelt wurde;
• einen voreilenden Korrelationskanal, der von einem von dem pünktlichen Lokalcode um eine Verzögerung -d verschobenen Lokalcode entwickelt wurde; und
• einen stark voreilenden Korrelationskanal, der von einem von dem pünktlichen Lokalcode um eine Verzögerung -2d verschobenen Lokalcode entwickelt wurde;

wobei der Code-Diskriminator (121) ein Signal $D_{code}$ entwickelt, das von einer linearen Kombination von komplexen Signalen gebildet wurde, jeweils mit $Z_P$, $Z_R$, $Z_{TR}$, $Z_A$, $Z_{TA}$ bezeichnet, die von den Korrelationskanälen kommen, gemäß der folgenden Beziehung:

$$D_{code} = \frac{\text{Re}\left[\{2.(Z_A - Z_R) - (Z_{TA} - Z_{TR})\}\bar{Z}_P\right]}{\|Z_P\|^2}$$

,

wobei die Funktion zum Entdecken von falschen Aufschaltungen von denselben komplexen Signalen entwickelt und gemäß der folgenden Beziehung definiert wird:

$$\text{Detektor} = \frac{\mathrm{Re}\left[(-Z_{TA} + 2Z_P - Z_{TR})\overline{Z}_P\right]}{\|Z_P\|^2}.$$

**5.** Empfangsvorrichtung nach einem der vorherigen Ansprüche, **dadurch gekennzeichnet, dass** sie ferner Vergleichsmittel umfasst, die zum Vergleichen des Wertes der Funktion zum Erkennen von falschen Aufschaltungen mit einem Schwellenwert konfiguriert sind.

**6.** Empfangsvorrichtung nach Anspruch 5, **dadurch gekennzeichnet, dass** sie Warnmittel umfasst, die so konfiguriert sind, dass sie ausgelöst werden, wenn der Schwellenwert von der Funktion zum Erkennen von falschen Aufschaltungen überschritten wird.

**7.** Empfangsvorrichtung nach Anspruch 5 oder 6 in Abhängigkeit von Anspruch 2 oder 3, **dadurch gekennzeichnet, dass** sie ferner Schaltmittel umfasst, die zum Aktivieren eines ersten Code-Diskriminators (121) konfiguriert sind, wenn die Funktion zum Erkennen von falschen Aufschaltungen geringer ist als der Schwellenwert, oder eines zweiten Code-Diskriminators (121), wenn die Funktion zum Erkennen von falschen Aufschaltungen höher ist als der Schwellenwert.

**8.** Empfangsvorrichtung nach Anspruch 5 oder 6 in Abhängigkeit von Anspruch 2 oder 3, **dadurch gekennzeichnet, dass** sie ferner Schaltmittel umfasst, die zum Aktivieren eines zweiten Code-Diskriminators (121) konfiguriert sind, wenn die Funktion zum Erkennen von falschen Aufschaltungen einen ersten Schwellenwert übersteigt, und zum Aktivieren eines ersten Code-Diskriminators (121), wenn die Funktion zum Erkennen von falschen Aufschaltungen unter einen zweiten Schwellenwert abfällt, der niedriger ist als der erste Schwellenwert.

**9.** Empfangsvorrichtung nach Anspruch 7 oder 8, wobei der erste Code-Diskriminator (121) vom engen Korrelatortyp ist und der zweite Code-Diskriminator (121) vom Doppel-Delta-Typ ist.

**10.** Empfangsvorrichtung nach einem der Ansprüche 5 bis 9, **dadurch gekennzeichnet, dass** die ein oder mehreren Schwellenwerte vorbestimmt sind.

**11.** Empfangsvorrichtung nach einem der Ansprüche 5 bis 9, die ferner Mittel zum Schätzen des Signal-Rausch-Verhältnisses des empfangenen Signals umfasst, **dadurch gekennzeichnet, dass** die ein oder mehreren Schwellenwerte in Abhängigkeit von dem von dem Mittel zum Schätzen des Signal-Rausch-Verhältnisses geschätzten Signal-Rauch-Verhältnis justiert werden.

**12.** Empfangsvorrichtung nach einem der vorherigen Ansprüche, **dadurch gekennzeichnet, dass** sie ferner Rauschfiltermittel umfasst, die auf die Funktion zum Erkennen von falschen Aufschaltungen angewendet werden.

**13.** Empfangsvorrichtung nach einem der vorherigen Ansprüche, **dadurch gekennzeichnet, dass** sie ferner Bias-Schätzmittel umfasst, die von einer zweiten Funktion zum Erkennen von falschen Aufschaltungen gebildet werden, die von komplexen Signalen bestimmt werden, die zusätzlichen Korrelationskanälen entsprechen, die von gegenseitig verschobenen Lokalcodes gebildet und relativ zu dem pünktlichen Lokalcode um eine Voreilung oder eine Verzögerung von mehr als 1 Chip verschoben ist.

## Claims

**1.** A reception device for a satellite positioning system, comprising at least one reception channel (1) configured to process a received digitised signal originating from an ultra-high frequency signal transmitted by a determined satellite providing a specific spreading code, each reception channel (1) comprising at least:

- means (102, 104) for generating a local carrier;
- means (m) for demodulating said digitised signal received by said local carrier;
- means (101, 103) for generating a punctual local code corresponding to said spreading code of said satellite, said generation means also generating a plurality n of local codes that are shifted relative to the punctual local code by non-zero delays $d_i$;
- correlation means ($M_V$) for determining signals representing correlation coefficients between the received signal demodulated by said local carrier and the local codes forming as many correlation channels,

with the signals output by said correlation means being processed by a correlation integrator (109) outputting complex signals $Z_i$ corresponding to respective correlation channels,

said reception device being **characterised in that** each reception channel (1) further comprises means for determining a function for detecting false lock-ons determined on the basis of said complex signals according to the following relation:

$$Detector = \frac{\mathrm{Re}[Z_I \bar{Z}_P]}{\|Z_P\|^2}$$

in which $Z_P$ designates the complex signal coming from the correlation channel of the digitised signal received with the punctual local code, and $Z_i$ designates a linear combination of said complex signals $Z_i$ associated with respective weighting coefficients $\alpha_i$, said delays $d_i$ and weighting coefficients $\alpha_i$ verifying the following relation:

$$\begin{cases} \sum\limits_{i=1}^{i=n} \alpha_i = 0 \\ \sum\limits_{i=1}^{i=n} d_i.\alpha_i = 0 \end{cases}$$

2. The reception device according to claim 1, **characterised in that** a correlation integrator (109) processes the signals output by said correlation means for a plurality of determined correlation channels, with said complex signals $Z_i$ coming from said correlation integrator (109) being processed by at least one code discriminator (121) outputting a signal controlling a code loop (DLL), with a plurality of the signals from among said complex signals $Z_i$ being used for the false lock-on detection function.

3. The reception device according to claim 2, **characterised in that** it comprises five correlation channels:

   • A punctual correlation channel developed from said punctual local code;
   • a delayed correlation channel developed from a local code shifted from said punctual local code by a delay d;
   • a highly delayed correlation channel developed from a local code shifted from said punctual local code by a delay 2d;
   • an advanced correlation channel developed from a local code shifted from said punctual local code by a delay -d; and
   • a highly advanced correlation channel developed from a local code shifted from said punctual local code by a delay -2d;

with the function for detecting false lock-ons being developed from complex signals and being defined according to the following relation:

$$Detector = \frac{\mathrm{Re}[(-Z_{TA} + 2Z_P - Z_{TR})\bar{Z}_P]}{\|Z_P\|^2}$$

4. The reception device according to claim 2, **characterised in that** it comprises five correlation channels:

   • A punctual correlation channel developed from said punctual local code;
   • a delayed correlation channel developed from a local code shifted from said punctual local code by a delay d;
   • a highly delayed correlation channel developed from a local code shifted from said punctual local code by a delay 2d;
   • an advanced correlation channel developed from a local code shifted from said punctual local code by a delay -d; and
   • a highly advanced correlation channel developed from a local code shifted from said punctual local code by a delay -2d;

with said code discriminator (121) developing a signal $D_{code}$ formed by a linear combination of the complex signals, respectively designated $Z_P$, $Z_R$, $Z_{TR}$, $Z_A$, $Z_{TA}$ coming from said correlation channels according to the following relation:

$$D_{code} = \frac{\mathrm{Re}\left[\left\{2.(Z_A - Z_R) - (Z_{TA} - Z_{TR})\right\}\overline{Z}_P\right]}{\|Z_P\|^2},$$

with the function for detecting false lock-ons being developed from the same complex signals and being defined according to the following relation:

$$\text{Detector} = \frac{\mathrm{Re}\left[(-Z_{TA} + 2.Z_P - Z_{TR}).\overline{Z}_P\right]}{\|Z_P\|^2}.$$

5. The reception device according to any one of the preceding claims, **characterised in that** it further comprises comparison means configured to compare the value of said function for detecting false lock-ons with a threshold value.

6. The reception device according to claim 5, **characterised in that** it comprises warning means configured to be triggered when said threshold value is exceeded by said function for detecting false lock-ons.

7. The reception device according to any one of claims 5 to 6 as dependent on claim 2 or 3, **characterised in that** it further comprises switching means configured to activate a first code discriminator (121) when said function for detecting false lock-ons is lower than said threshold value or a second code discriminator (121) when said function for detecting false lock-ons is higher than said threshold value.

8. The reception device according to any one of claims 5 to 6 as dependent on claim 2 or 3, **characterised in that** it further comprises switching means configured to activate a second code discriminator (121) when said function for detecting false lock-ons exceeds a first threshold value and to activate a first code discriminator (121) when said function for detecting false lock-ons falls below a second threshold value lower than said first threshold value.

9. The reception device according to any one of claims 7 to 8, wherein said first code discriminator (121) is of the narrow correlator type and said second code discriminator (121) is of the Double Delta type.

10. The reception device according to any one of claims 5 to 9, **characterised in that** said one or more threshold values are predetermined.

11. The reception device according to any one of claims 5 to 9, further comprising means for estimating the signal-to-noise ratio of the received signal, **characterised in that** said one or more threshold values are adjusted as a function of the signal-to-noise ratio estimated by said means for estimating the signal-to-noise ratio.

12. The reception device according to any one of the preceding claims, **characterised in that** it further comprises noise filtering means applied to said function for detecting false lock-ons.

13. The reception device according to any one of the preceding claims, **characterised in that** it further comprises bias estimation means formed by a second function for detecting false lock-ons determined from complex signals corresponding to additional correlation channels formed from mutually shifted local codes and shifted relative to said punctual local code by an advance or a delay that is greater than 1 chip.

FIG.1

FIG.2A

FIG.2B

FIG.3A

FIG.3B

FIG.4

**EP 2 520 949 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2739695